# EUROPEAN PATENT APPLICATION

(11) **EP 0 598 152 A1**
(43) Date of publication of application: **25.05.1994**
(21) Application number: 92310518.3
(22) Date of filing: 18.11.1992
(51) Int. Cl.: H02G 15/113

(54) **Casings**

(71) Applicant: B & H ( NOTTM) LIMITED, Clifton, Nottingham NG11 8JZ (GB)
(72) Inventor: Hollick, David John, Chinnor, Oxford OX9 4PZ (GB)
(74) Representative: Jones, Stephen Anthony

(57) **Abstract**

A casing for electrical apparatus comprises a pair of hollow body parts (10, 11) each of which has an edge (17, 18), the edges being contiguous when the parts are assembled together. Each edge is formed with first and second portions (23, 21) which are received in a rebated recess of a tubular connector element (24). The two body parts can be flexed apart to insert contents but are prevented from separating by the edge formations, the first portions (23) resisting separation of the body parts at least when they are partly separated, whilst the second portions (21) prevent lateral removal from the recess of the tubular connector element (24).

## Description

This invention relates to casings particularly, but not exclusively, for use in encasing electrical apparatus such as connections in power distribution systems.

It is known to produce casings for electrical connections in the form of a hollow plastics body in two components, wherein these components are initially produced side-by-side as an integral moulding. The structure is then reheated along a line between the two components and is folded to bring those components into mutual contact. The resultant hollow body has the advantage that the two components can be flexed apart sufficiently to allow insertion of the electrical connection into the hollow, but thereafter are held together comparatively firmly. Thus, the need to hold the components together by other means (e.g. manually) is avoided, both during insertion of the electrical connection and in subsequent sealing of the casing.

Casings of this type do however suffer from the disadvantage that they are bulky for transportation between the point of manufacture and the point of use, and for storage prior to use. Even if transported or stored in the "unfolded" condition where several such items can be nested one within another, the area occupied by the casing is relatively large.

It is an object of the present invention to obviate or mitigate this problem.

According to the present invention, there is provided a casing comprising a hollow body formed in two parts, the parts having respective edges which are contiguous with one another when the parts are assembled together, and a connector element which extends at least partly along said edges and which receives said edges in a rebated recess therein, the assembly being such that the body parts can be flexed apart about said edges to enable the casing to be placed over an article to be encased, the edges having respective first portions which abut one another at least when the body parts are flexed apart to resist further flexing of the body parts, the edges also having respective second portions which prevent said edges from being withdrawn laterally from the rebated recess.

Preferably, each said edge is formed on a generally planar flange on the respective body part, the first portions of the edges are in face-to-face abutment at least when the body parts are flexed as aforesaid, and the second portions of the edges extend out of the planes of the flanges, respectively.

The first portions may be coplanar with the flanges or may extend slightly out of the planes of the flanges either towards or away from each other.

Advantageously, a plurality of first and second portions are provided on each edge, and these preferably alternate along the length of that edge.

Preferably, the edges are also provided with third portions which prevent relative movement of the body portions longitudinally to the rebated recess.

Conveniently, the connector element is in the form of a split tube, for example of circular cross-section.

The invention will now be further described, by way of example only, with reference to the accompanying drawing, in which:
- Figure 1: is a perspective view showing a first casing according to the present invention during an initial stage of its manufacture;
- Figure 2: is an enlarged scrap view in the direction of arrow A in Figure 1;
- Figure 3: is a perspective view showing the casing of Figure 1 in a subsequent stage of its manufacture;
- Figure 4: is an enlarged scrap view in the direction of arrow B in Figure 3;
- Figure 5: is a perspective view, on a greatly enlarged scale of part of the casing as seen in Figure 3 partly broken away;
- Figure 6: is a similar view to Figure 2, but showing a second embodiment of the invention;
- Figure 7: is a perspective view of a body component forming part of a third embodiment of the invention;
- Figure 8: is an end elevational view of the component of Figure 7;
- Figure 9: is a side elevational view (along the direction of arrow C in Figure 7) of the component of Figure 7;
- Figure 10: is an end elevational view of a casing formed from two of the components of Figure 7;
- Figure 11: is a perspective view, on an enlarged scale, of part of the casing of Figure 10, partly cut away; and
- Figure 12: is an end elevational view of the casing of Figure 10 with the two components flexed apart.

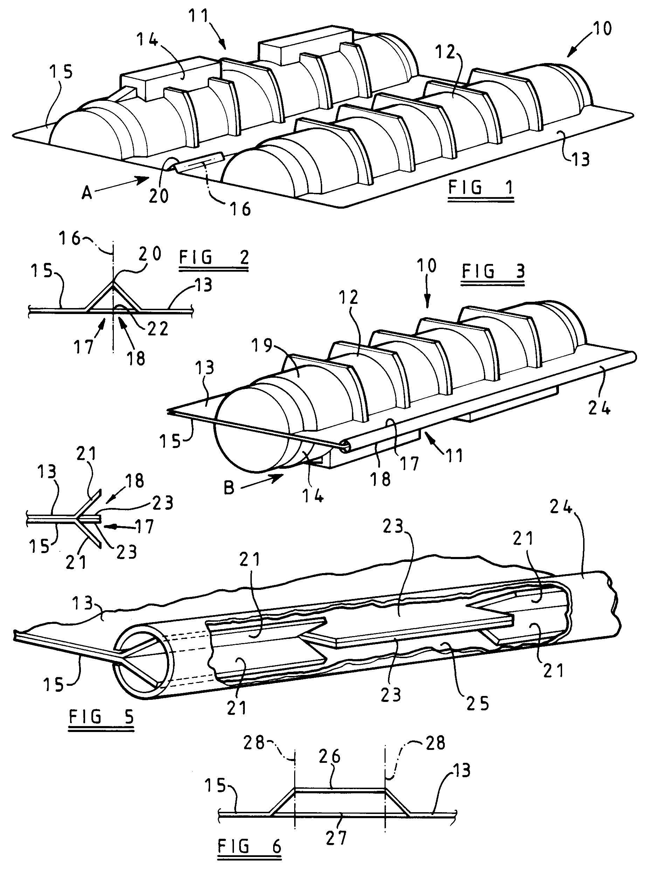

Referring first to Figure 1, the illustrated casing comprises two components 10, 11 which are initially produced side-by-side as an integral plastics moulding. The component 10 is composed of a hollow body part 12 surrounded by a planar flange 13, while the component 11 is similarly composed of a hollow body part 14 and a flange 15. After the initial moulding operation, the components 10 and 11 are separated by cutting along a line 16: this produces respective edges 17 and 18 on the flanges 13 and 15, respectively. The components are then placed together with the flanges 13, 15 in face-to-face relation (see Figure 3) so that the edges 17, 18 are contiguous with one another and the two body parts 12, 14 co-operate to form a recess 19. This recess is destined to receive electrical apparatus such as a connection in a power distribution system.

As can be seen to advantage in Figure 2, in the initial moulding a series of formations 20 (only one shown) are produced so as to straddle the line 16. In the illustrated embodiment, these formations are of inverted v-shape and, after cutting along the edge 16, form respective projections 21 on the edges 17, 18 which extend out of the plane of the respective flange 13, 15 at an angle of about 45°. The formations 20 alternate along the line 16 with flats 22 which, after cutting, form projections 23 on the edges 17, 18 which are coplanar with the respective flanges 13, 15. Each of the edges 17, 18 thus has angled and flat projections alternating along its length.

When the components 10, 11 are placed together as depicted in Figure 3, the angled projections 21 on edge 17 are aligned with the similar projections on edge 18, whilst the flat projections 23 on both edges are similarly aligned and are in face-to-face abutment. A connector element 24 is then slid lengthwise along the edges 17, 18 so that the projections 21, 23 are received in a rebated recess 25 therein - see Figure 5, wherein the element 24 is shown partly cut-away. In the illustrated embodiment, the element 24 is in the form of a split tube of circular cross-section.

Under these conditions, the inherent flexibility of the material from which they are made will allow the components 10, 11 to be flexed apart sufficiently to enable the casing to be placed over the electrical connection, with the connection being received within the recess 19. During this process, the projections 23 will be urged into close contact, thereby resisting further flexing movement of the components 10, 11 and also tending to return those components to their closed condition. At the same time, the angled projections 21 prevent the edges 17, 18 disengaging from the connector element 24.

Once the casing has been placed around the electrical connection, the space between the two components 10, 11 is filled with a cold curing compound for electrical insulation purposes. A strip of sealing tape (not shown) can be provided between the edges 17, 18 to prevent leakage of the compound therefrom. The other edges, for example flanges 13, 15, can also be sealed with tape. Either spring steel clips or a U-shaped plastics or metal extrusion can be used to hold the components during curing of the compound.

In actual usage, the casing can be transported and/or stored after the components 10, 11 have been separated and before they are assembled into their final configuration and before the connector element 24 is engaged with the edges 17, 18, the latter operations being readily performed on-site. During such transportation and/or storage, the components 10, 11 can be nested one within the other, along with components of a number of other similar casings, thereby minimising their overall bulk.

Although not shown, locating means can be provided on the components 10, 11 to prevent relative longitudinal slippage therebetween. For example, this locating means can be in the form of one or more tabs on the edge 17 which locate in corresponding recesses in the edge 18, and/or vice versa. Additionally or alternatively, raised dimples can be provided on the flange 13 which engage with complementary recesses or apertures in the flange 15, and/or vice versa.

In the above embodiment, the projections 23 have been described as being normally in face-to-face contact, i.e. even before the components 10, 11 are flexed to open up recess 19. However, it is possible that these projections 23 could be angled slightly so that they are normally out of contact with one another and brought into abutment only when the components 10, 11 have been flexed apart by a small amount. Conversely, the projections 23 can be angled in the reverse direction to provide a certain amount of pre-loading on the components 10, 11. It is also not necessary that the projections 21 and 23 on one flange are exactly aligned with their counterparts on the other flange: all that is necessary is that there is a degree of overlap between the respective projections 23.

The projections 21 can take many different forms other than that specifically described above, e.g. they could be part-circular in cross-sectional shape and/or could be formed by raised ribs. The connector element 24 can similarly take many other forms, and could, for example, comprise a flat spine from whose edges a pair of integral arms extend at approximately the same angle as the projections 21. It is also possible for the connector element to extend only part way along the edges 17, 18 rather than along the whole length thereof as shown in the illustrated embodiment.

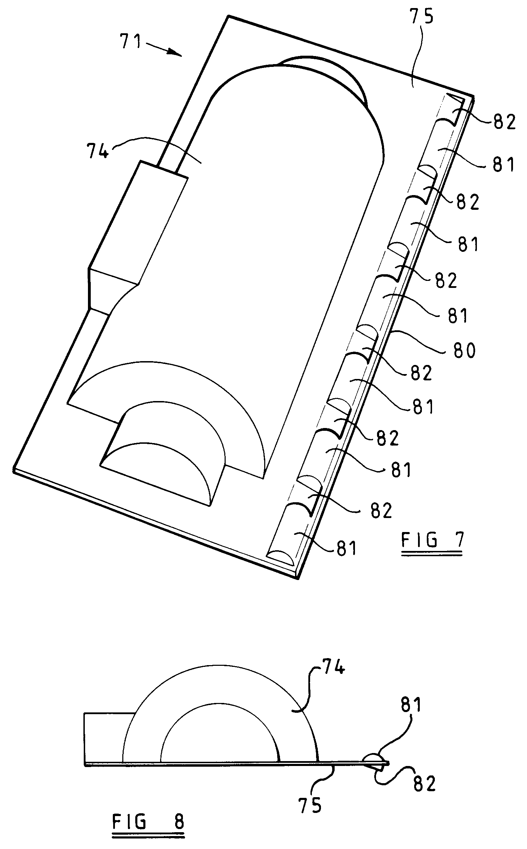

In the case where the initial moulding is produced by vacuum forming, it may be that the distance between the body portions 12, 14 is not sufficient to create an adequate thickness of material in the region of the formations 20 and the flats 22. Under these conditions, the area between the body portions can take the form depicted in Figure 6, i.e. wherein the parts which ultimately form the projections 21, 23 are separated by respective land portions 26, 27. Two cuts are then made at either end of these portions, as indicated at 28, with the land portions 26, 27 ultimately being discarded.

Although it is convenient for the components 10, 11 to be produced initially in integral side-by-side relation, this is not essential and the components could be formed individually instead, which may enable the two-component assembly method.

Referring now to Figures 7 yo 12, a casing for an electrical connection comprises two identical body components 71,72 which are formed as plastics mouldings. One component 71 is shown in Figure 7. The component 71 comprises a hollow body part 74 surrounded by a planar flange 75. Likewise, the other component 72 comprises a hollow body part 76 and a flange 77. To form a casing, the two components 71,72 are placed together with the flanges 75,77 in face-to-face relation so that the two body parts 74,76 form an enclosure.

Along one edge 80 of the component 71 (and similarly on the other component 72) there are formed a series of hollow hemicylindrical protrusions 81 which extend above the plane of the flange 75, and which alternate with a series of planar ramps 82 which extend below the plane of the flange 75.

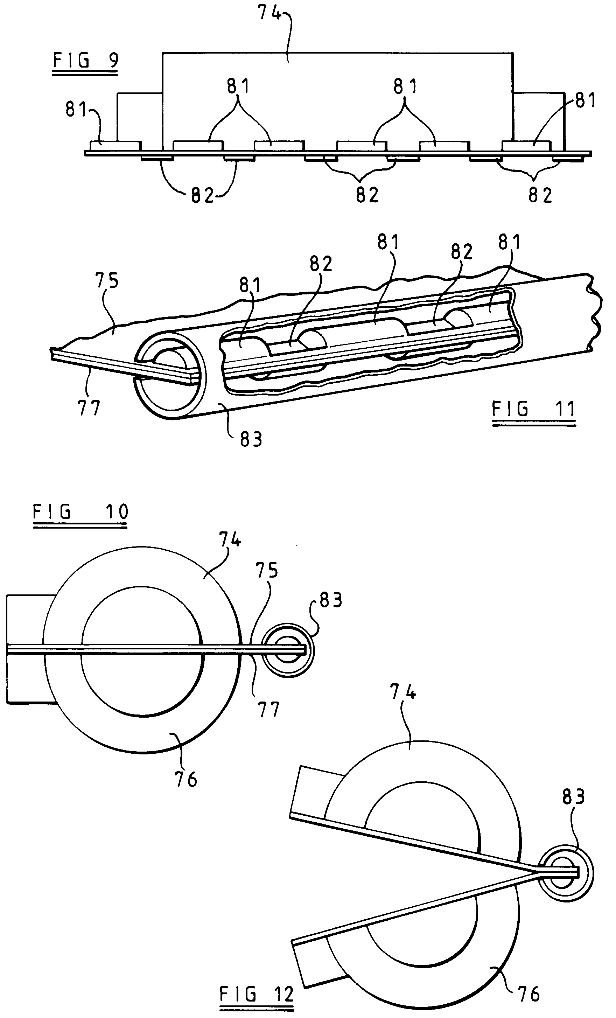

When the components 71,72 are placed together as depicted in Figure 10, the ramps 82 of one component are received within the hollow protrusions 81 of the other, and vice versa. A connector element in the form of a split tube 83 is then slid lengthwise along the edges 80 so that the protrusions 81 are received in the rebated recess 84 therein (see Figure 11, in which the tube 83 is shown partly cut away).

In the assembled condition, the protrusions 81 prevent lateral withdrawal of the components 71,72 from the split tube 83. Also, the cooperation of the ramps 82 and the protrusions 81 prevent relative movement of the components 71,72 longitudinally to the tube 83. Further, the peripheral regions of the flanges 75,77 abut each other and limit the extent to which the components 71,72 can be flexed apart. However, the inherent flexibility of the material from which the components 71,72 are made does allow them to be flexed apart sufficiently (see Figure 12) for the casing to be fitted over an electrical connection, which is received within the enclosure formed between the body parts 74,76. When released, the resilience of the material then urges the components 71,72 to the closed position.

After fitting, the casing is filled with a cold curing compound as previously described.

The invention has been described above with respect to casings for electrical apparatus. However, it will be appreciated that there are many other fields in which a casing according to the invention can be utilised.

## Claims

1. A casing comprising a hollow body formed in two parts, the parts having respective edges which are contiguous with one another when the parts are assembled together, and a connector element which extends at least partly along said edges and which receives said edges in a rebated recess therein, the assembly being such that the body parts can be flexed apart about said edges to enable the casing to be placed over an article to be encased, the edges having respective first portions which abut one another at least when the body parts are flexed apart to resist further flexing of the body parts, the edges also having respective second portions which prevent said edges from being withdrawn laterally from the rebated recess.

2. A casing according to claim 1, wherein each said edge is formed on a generally planar flange on the respective body part, the first portions of the edges are in face-to-face abutment at least when the body parts are flexed as aforesaid, and the second portions of the edges extend out of the planes of the flanges.

3. A casing according to claim 2, wherein the first portions are coplanar with the flanges.

4. A casing according to claim 2, wherein the first portions extend slightly out of the plane of the flanges.

5. A casing according to claim 4, wherein the flanges extend out of said plane towards each other.

6. A casing according to claim 4, wherein the flanges extend out of said plane away from each other.

7. A casing according to any preceding claim, wherein a plurality of first and second portions are provided on each edge.

8. A casing according to claim 7, wherein the first and second portions alternate along the length of the edge.

9. A casing according to any one of the preceding claims, wherein the body parts are provided with locating means to prevent longitudinal slippage therebetween.

10. A casing according to Claim 9, wherein the locating means are in the form of one or more tabs on said edge of one body part which locate in corresponding recesses in said edge of the other body part.

11. A casing according to any one of the preceding claims, wherein the second portions are hemicylindrical protrusions.

12. A casing according to Claim 10 and Claim 11, wherein the locating means comprise a plurality of ramps alternating with the hemicylindrical protrusions, the ramps of one body part being received within the protrusions of the other and vice versa.

13. A casing according to any preceding claim, wherein the connector element is in the form of a split tube.

14. A casing according to claim 13, wherein the tube is of circular cross-section.

15. A casing substantially as hereinbefore described with reference to and as illustrated in Figures 1 to 6.

16. A casing substantially as hereinbefore described with reference to and as illustrated in Figures 7 to 10.

17. A method of encasing an article, comprising the steps of
a) forming a casing comprising a hollow body formed in two parts, the parts having respective edges which are contiguous with one another when the parts are assembled together, and a connector element which extends at least partly along said edges and which receives said edges in a rebated recess therein, the edges having respective first portions which abut one another at least when the body parts are flexed apart to resist further flexing of the body parts, the edges also having respective second portions which prevent said edges from being withdrawn laterally from the rebated recess,
b) flexing apart said body parts about said edges to enable the casing to be placed over the article, and
c) placing the casing over the article.
